(19) **Europäisches Patentamt**
European Patent Office
Office européen des brevets

(11) **EP 3 122 519 B1**

(12) **EUROPÄISCHE PATENTSCHRIFT**

(45) Veröffentlichungstag und Bekanntmachung des Hinweises auf die Patenterteilung:
**03.01.2018 Patentblatt 2018/01**

(21) Anmeldenummer: **15712267.2**

(22) Anmeldetag: **10.03.2015**

(51) Int Cl.:
**B25J 9/00** (2006.01)　　　**B25J 9/10** (2006.01)

(86) Internationale Anmeldenummer:
**PCT/EP2015/054990**

(87) Internationale Veröffentlichungsnummer:
**WO 2015/144429 (01.10.2015 Gazette 2015/39)**

(54) **PARALLELROBOTER UND STEUERUNGSVERFAHREN**

PARALLEL ROBOT AND CONTROL METHOD

ROBOT PARALLÈLE ET PROCÉDÉ DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2014 DE 102014104132**

(43) Veröffentlichungstag der Anmeldung:
**01.02.2017 Patentblatt 2017/05**

(73) Patentinhaber: **Technische Universität Dresden 01069 Dresden (DE)**

(72) Erfinder:
- **DÖRING, Michael**
  **01097 Dresden (DE)**
- **HOLZWEISSIG, Johann**
  **01277 Dresden (DE)**

(74) Vertreter: **2s-ip Schramm Schneider Bertagnoll Patent- und Rechtsanwälte Part mbB Postfach 86 02 67 81629 München (DE)**

(56) Entgegenhaltungen:
**WO-A1-2012/116991　　US-A- 5 326 218**

**Beschreibung**

Die Erfindung betrifft einen Parallelroboter mit zumindest einer Antriebseinrichtung und einer Werkzeugplattform zur Ankopplung zumindest eines Endeffektors sowie ein Steuerungsverfahren für einen solchen Parallelroboter.

Als Parallelroboter werden solche Roboter bezeichnet, die mindestens zwei geschlossene kinematische Ketten umfassen, also mindestens zwei kinematische Ketten, die an ihren Enden, also den Unterarmen, miteinander verbunden sind, beispielsweise über eine Werkzeugplattform. Die Werkzeugplattform dient der Aufnahme eines Endeffektors, beispielsweise eines Greifwerkzeugs.

Bei einem reversierenden Bewegungsvorgang, also einer periodischen Bewegung, muss ein Großteil der kinetischen Energie im System durch die Antriebseinrichtung, also den Motor, vor jeder Bewegungsumkehr des Motors abgebaut werden, weil es hier keine brauchbare Möglichkeit der Energiespeicherung gibt.

Aus WO 2012/116991 bekannt ist ein Parallelroboter mit mindestens einer geschlossenen kinematischen Kette, der mindestens zwei Grundstrukturen aus mindestens je einem Oberarm und je einem Unterarm umfasst, wobei die Oberarme an einem ersten Ende mittels je eines Oberarmgelenks gestellfest angeordnet sind, am zweiten Ende mittels je eines Unterarmgelenks mit einem ersten Ende eines Unterarms verbunden sind und die Unterarme an ihrem zweiten Ende mittels eines oder je eines Handgelenks mit einem Endeffektor verbunden sind, wobei jeder Oberarm mit je einer Antriebseinrichtung antreibbar verbunden ist und wobei das Oberarmgelenk und das Unterarmgelenk umlauffähig sind.

Umlauffähig heißt, dass ihre Antriebsachsen sich im Betrieb des Roboters um beliebige Vielfache von 360 Grad drehen können, ohne dass es zu Kollisionen mit den angelenkten Armen oder mit anderen Elementen des Roboters käme. Das umlauffähige Element hat also keine Endlagen, in denen eine Bewegungsumkehr erfolgen müsste, kann sich also stets in ein und derselben Richtung bewegen.

WO 2012/116991 betrifft einen Parallelroboter gemäß dem Oberbegriff des Anspruchs 1.

US 5 326 218 A betrifft einen Handhabungsarm mit einer Kurbelschwingenmechanismus.

Aufgabe der vorliegenden Erfindung ist es, die Umlauffähigkeit des Parallelroboters auf andere Weise zu bewirken.

Erfindungsgemäß wird dies erreicht durch einen Parallelroboter mit den Merkmalen des Anspruchs 1 und ein Verfahren mit den Merkmalen des Anspruchs 12 erreicht. Vorteilhafte Weiterbildungen der Erfindung sind in den abhängigen Ansprüchen definiert.

Hiernach bereitgestellt wird ein Parallelroboter mit zumindest einer Antriebseinrichtung und einer Werkzeugplattform zur Ankopplung zumindest eines Endeffektors, wobei der Parallelroboter durch eine erste kinematische Struktur und eine zweite kinematische Struktur gebildet ist, wobei die erste kinematische Struktur gestellfest drehbar angelenkt ist und die zweite kinematische Struktur gestellfest fixiert ist und die erste kinematische Struktur die Werkzeugplattform zur Aufnahme eines Werkzeugs aufweist und die zweite kinematische Struktur die zumindest eine Antriebseinrichtung aufweist und zum Antrieb der ersten kinematische Struktur ausgestaltet ist, wobei die erste kinematische Struktur und die zweite kinematische Struktur nur über zumindest ein Koppelgelenk miteinander gekoppelt sind, die erste kinematische Struktur und die zweite kinematische Struktur voneinander gliederfremd sind und die zumindest eine Antriebseinrichtung umlauffähig ausgestaltet ist.

Im Rahmen der vorliegenden Beschreibung umfasst eine jede kinematische Struktur zumindest zwei Glieder und zumindest ein Gelenk, das die beiden Glieder verbindet. Zwei Strukturen werden hier als "gliederfremd" bezeichnet, wenn sie keine gemeinsamen Glieder haben und insbesondere die eine Struktur nicht eine Teilmenge der anderen Struktur ist. Weil erfindungsgemäß beide kinematischen Strukturen jeweils gestellfest fixiert sind, ist ausgeschlossen, dass die beiden kinematischen Strukturen seriell verkettet sind und das Koppelgelenk einfach nur das jeweilige Ende beider Strukturen darstellt.

Erfindungsgemäß ist die erste kinematische Struktur, also diejenige, an welche die Werkzeugplattform angekoppelt ist, parallel ausgebildet. Die erste kinematische Struktur, auch Grundstruktur genannt, wird gebildet durch zumindest zwei kinematische Ketten, die an ihren Enden über die Werkzeugplattform miteinander verbunden sind. Beispiele derartiger Parallelroboter sind Deltaroboter (drei parallele kinematische Ketten) und Hexapodroboter (sechs parallele kinematische Ketten).

Die zweite kinematische Struktur dient also dem Antrieb der ersten kinematischen Struktur. Die Umlauffähigkeit des Parallelroboters wird alleine durch die Umlauffähigkeit der zweiten kinematischen Struktur, welche die Antriebseinrichtung umfasst, erreicht. Im Unterschied zu den bekannten Designs, bei denen die Umlauffähigkeit den Aufbau derjenigen kinematischen Struktur beeinflusst, welche die Bewegungen der Werkzeugplattform bestimmt (auch "Grundstruktur" genannt), ist bei der vorliegenden Gestaltung diese kinematische Struktur keiner Einschränkung unterworfen und kann daher konventionell gestaltet sein. Dies erleichtert einerseits die Gestaltung des Parallelroboters selbst und andererseits auch die Programmierung der Bewegungen des Roboters, weil die erste kinematische Struktur (die den Effektor trägt) keinen Konfigurationswechsel aufweist und somit für die Programmierung der Steuerung nur eine Stellung der ersten kinematischen Struktur nötig ist.

Die kinematischen Parameter der ersten kinematischen Struktur können somit frei gewählt und angepasst werden. Die Anpassung des Roboters hinsichtlich Arbeitsraum und Übersetzungsverhältnissen ermöglicht, dass die Gliedlängen der ersten kinematischen Struktur und Anordnungsposen der Stränge durch konstruktive Änderungen der Einbaulage im Gestell und Längenänderungen der Glieder der ersten kinematischen Struktur erreicht werden können.

Aufgrund der Trennung des Parallelroboters in Grundstruktur, welche die Werkzeugplattform trägt, und antreibende Struktur kann die Grundstruktur steifer gestaltet werden, denn es entfällt die sonst notwendige Oberarmgestaltung mit Zwischengliedern zur Herstellung der Umlauffähigkeit (was eben die Steifigkeit beeinträchtigen kann). Derartige Zwischenglieder wären zudem einer hohen Biegebelastung ausgesetzt. Zugleich wird die Gestaltung des Oberarms nicht durch die Forderung der Umlauffähigkeit des Parallelroboters eingeschränkt. Insbesondere kann auf eine relativ aufwendige beidseitige Lagerung des Oberarms verzichtet werden. Es werden Konfigurationswechsel der Grundstruktur vermieden, und es gibt keine ungünstigen Stellungen der Grundstruktur, es kann also in jeder Stellung mit einer Bewegung begonnen werden.

Ein weiterer Vorteil ist der geringere Platzbedarf für das Gestell, am welchem die beiden kinematischen Strukturen befestig sind, im Vergleich zu bekannten umlauffähigen Parallelrobotern.

Die erste kinematische Struktur umfasst zumindest zwei parallele kinematische Stränge umfassen, deren jeder zumindest einen Oberarm und zumindest einen Unterarm, wobei der Oberarm an einem Ende mittels jeweils eines Oberarmgelenks gestellfest angeordnet ist, an einem zweiten Ende mittels je eines Unterarmgelenks mit einem ersten Ende des Unterarms verbunden ist und der Unterarm an seinem zweiten Ende mit der Werkzeugplattform gekoppelt ist.

Das jeweilige Koppelgelenk ist an dem betreffenden Oberarm angeordnet.

In vielen Fällen ist jeder der Unterarme durch zwei parallel zueinander angeordnete Streben gebildet.

Die zweite kinematische Struktur umfasst ein Vorgetriebe, das zwischen Antriebseinrichtung und Koppelgelenk angeordnet ist, wobei das Vorgetriebe meist eine Kurbel und ein Pleuel sowie ein Gelenk zwischen Kurbel und Pleuel umfasst und wobei die Kurbel umlauffähig ist. Auch für das Vorgetriebe gilt, dass es gliederfremd zu der ersten kinematischen Struktur ist.

Der Vorteil der Ausgestaltung mit einer Kurbel-Pleuel Kombination zur Erreichung der antriebsseitigen Umlauffähigkeit ist gegenüber einer Ritzel-Zahnstangenkombination (oder analoger Vorrichtungen, Spindel, ...), dass hiermit in in einfacher Weise in selber Frequenz der Bewegungszyklen ein Durchlauf durch Streck- und Decklagen oder gar ein kompletter Umlauf erreicht werden kann und dass allein durch die Verwendung einer Kurbel-Pleuel Kombination eine zyklische Bewegung im Arbeitsraum mit Richtungsumkehren bei umlaufender Antriebsweise realisiert werden kann. Die Ausprägung des Vorgetriebes mit einer umlaufenen Kurbel ist Voraussetzung für den vorteilhaften umlaufenden Betrieb.

Der Vorteil der Ausprägung eines Vorgetriebes, mit Kurbel und Pleuel, in Kombination mit einer ersten und zweiten kinematischen Kette liegt in der einfachen Anpassbarkeit des Arbeitsraumes des Roboters unter Beibehaltung der Abmessungen der ersten Struktur. So kann z.B. durch die Längenänderung der Kurbel der Arbeitsraum variiert werden, ohne die Grundstruktur ändern zu müssen. Gerade im Hinblick auf die Realisierung der Umlauffähigkeit, die durch fixe Endlagen geprägt ist, ist dieses ein Vorteil bei der mechanischen Anpassung des Roboterarbeitsraumes an die konkrete Aufgabe oder nachträgliche Umrüstung.

Zudem bietet die Teilung in zwei kinematische Strukturen die Möglichkeit einer besonders steifen Ausführung der ersten kinematischen Struktur, da an der Lagerung des Oberarms kein Antriebsglied beteiligt ist und demnach mit geringen räumlichen Einschränkungen die Lagerwahl und Lagerdimensionierung erfolgen kann. Ein weiterer Vorteil aus der Trennung von Oberarmlagerung und Antrieb ist die leichtere Medienführung durch den Oberarm, da die Antriebe diese nicht behindern.

Hierbei gilt, dass für alle Stellungen des Koppelpunktes, also des Punktes auf dem Oberarm, an welchem das Koppelgelenk angeordnet ist, mindestens eine Lösung für die jeweilige Stellung der Kurbel mit dem Vorgetriebe vorliegt, und damit die Vektorgleichung

$$\overrightarrow{P_{1M}P_1} + \overrightarrow{P_1P_{1KP}} = \overrightarrow{P_{1M}P_{1G8}} + \overrightarrow{P_{1G8}P_{1KP}}$$

erfüllt ist. Hierin ist

| | |
|---|---|
| $\overrightarrow{P_{1M}P_1}$ | der Vektor vom Drehpunkt der gestellfesten Antriebseinrichtung zum Drehpunkt der gestellfesten Oberarmlagerung; |
| $\overrightarrow{P_1P_{1KP}}$ | der Vektor vom Drehpunkt der gestellfesten Oberarmlagerung zum Drehpunkt des Koppelgelenks auf dem Oberarm; |
| $\overrightarrow{P_{1M}P_{1G8}}$ | der Vektor vom Drehpunkt der gestellfesten Antriebseinrichtung zum Drehpunkt $P_{1G8}$ des Gelenks 8 zwischen Kurbel und Pleuel; und |
| $\overrightarrow{P_{1G8}P_{1KP}}$ | der Vektor vom Drehpunkt des Gelenks zwischen Kurbel und Pleuel zum Drehpunkt des Koppelgelenks auf dem Oberarm. |

Im speziellen Fall eines ebenen Vorgetriebes, wobei die Kurbel das kürzeste Glied (mit der Länge $l_7$) sei, $l_{05}$ der Abstand zwischen dem Drehpunkt der gestellfesten Oberarmlagerung und dem Drehpunkt der gestellfesten Antriebseinrichtung sei, $l_9$ die Länge des Pleuels sei und $l_{010}$ die Distanz zwischen dem Drehpunkt der gestellfesten Oberarmlagerung und dem Drehpunkt des Koppelgelenks auf dem Oberarm vereinfacht sich die obige Bedingung zu:

$$l_{max} + l_7 \leq l' + l'',$$

mit

$l_{max}$    als längstes Glied aus $l_{05}$, $l_9$, $l_{010}$,
$l'$, $l''$    als Längen der übrigen beiden Glieder.

Dann kann die Anordnung des Vorgetriebes mit der Motoreinbaulage $^{K0}P_M$ frei um den anzutreibenden Teil der ersten kinematischen Struktur gewählt werden, um so den Bauraum in der jeweiligen Anordnung unter Beibehaltung eines vergleichbar großen Arbeitsraumes zu verkleinern.

Vorteilhaft ist es ferner, wenn die Übertragungswinkel des Vorgetriebes auf den Oberarm stets größer oder gleich 20 Grad sind. Dann nämlich sind die Kräfte- und Momentverhältnisse auch in den Strecklagen der ersten kinematischen Struktur im Vergleich zu den übrigen Lagen noch ausgewogen, das von der Antriebseinrichtung aufzubringende Moment und Gestellkräfte bleiben also im Rahmen.

Die zumindest eine Antriebseinrichtung kann eine Drehachse aufweisen, die nicht parallel zur Drehachse des Oberarms orientiert ist, die zweite kinematische Struktur kann einen Freiheitsgrad von mindestens drei aufweisen, und das Koppelgelenk an dem Oberarm kann einen Freiheitsgrad von mindestens drei aufweisen.

Zwei Freiheitsgrade des Koppelgelenkes können auch auf die zweite kinematische Struktur entfallen.

Insgesamt hat die zweite kinematische Struktur inklusive Koppelgelenk bei nicht achsparalleler Anordnung einen Freiheitsgrad von mindestens sechs.

Die zumindest eine Antriebseinrichtung kann auch eine Drehachse aufweisen, die parallel zur Drehachse des Oberarms orientiert ist, und die zweite kinematische Struktur kann einen Freiheitsgrad von mindestens zwei aufweisen, zuzüglich des Koppelgelenks an dem Oberarm mit einem Freiheitsgrad von mindestens eins.

Bei der Ausprägung mit achsparallelem Motor zur Oberarmdrehachse reduzieren sich die nötigen Freiheitsgrade der betreffenden Gelenke oder von jeweils mehr als zwei auf eins.

Als Vorteile ergeben sich einfache kostengünstige Lagerstellen, ein breites Sortiment an am Markt verfügbaren Lagern, eine leichtere Abdichtung, und es können Standardlösungen genutzt werden. Hinzukommen eine steifere Lagerung und eine einfachere Schmierung (sofern nachgeschmiert werden muss).

Besonders bevorzugt ist es, wenn genau drei parallele kinematische Stränge und drei Antriebseinrichtungen vorgesehen sind, wobei die drei Stränge und die drei Antriebseinrichtungen jeweils sternförmig zueinander angeordnet sind.

Ebenfalls bevorzugt sind Parallelroboter, die vier oder sechs parallele kinematische Stränge und die jeweils entsprechende Anzahl von Antriebseinrichtungen (und Vorgetriebe) besitzen.

Alle Stränge und Antriebseinrichtungen können in einem einzigen zentralen Gestell aufgenommen sein.

So wird eine platzsparende und beliebige Anordnung der Einzelstränge mit den Einbauposen durch Formänderung des zentralen Gestells und der Werkzeugplattform ermöglicht, zum Zweck der Anpassung des Roboters an eine jeweilige Bewegungsaufgabe bzw. eines Spektrums an Bewegungsaufgaben mit dem Ziel der Anpassung des Arbeitsraumes oder Übersetzungsverhältnisse.

Die jeweilige zweite kinematische Struktur kann einen Freiheitsgrad von mindestens drei aufweisen, und die jeweilige zweite kinematische Struktur ein exzentrisches kardanisches Gelenk aufweisen.

Das exzentrische kardanische Gelenk der zweiten kinematischen Struktur kann umlauffähig ausgestaltet sein.

Bei einer weiteren Variante ist zumindest eine der Antriebseinrichtungen mit einer Steuerungseinrichtung wirkverbunden, welche die Antriebseinrichtungen so ansteuert, dass die zumindest eine Antriebseinrichtung eine fortlaufende oder pilgerschrittartige Bewegung über Streck- und Decklagen des der zweiten kinematischen Struktur hinweg ausführen, derart, dass die Werkzeugplattform eine Bewegung zwischen mindestens zwei Arbeitspunkten innerhalb eines Arbeitsraumes ausführt.

Die Erfindung umfasst auch ein Verfahren zum Betreiben eines Parallelroboters mit zumindest einer Antriebseinrichtung, insbesondere eines Parallelroboters wie zuvor beschrieben, , wobei die zumindest eine Antriebseinrichtung jeweils eine fortlaufende oder pilgerschrittartige Bewegung über Streck- und Decklagen der zweiten kinematischen Struktur hinweg ausführt, derart, dass die Werkzeugplattform eine Bewegung zwischen mindestens zwei Arbeitspunkten innerhalb eines Arbeitsraumes ausführt.

Hierbei ist das Verfahren derart ausgestaltet, dass die Bewegung der Antriebseinrichtung zumindest einen Zyklus umfasst, der zumindest einen schwenkenden Bewegungsanteil und zumindest einen umlaufenden Bewegungsanteil umfasst, wobei der schwenkende Bewegungsanteil durch die fortlaufende oder pilgerschrittartige Bewegung gebildet wird und der schwenkende Bewegungsanteil keine Bewegung über Streck- und Decklagen umfasst.

Der so gesteuerte Parallelroboter kann also für eine Aufgabe so eingesetzt werden, dass zwischen zwei Betriebsarten, dem schwenkenden und dem umlaufenden Betrieb, in einem Bewegungszyklus gewechselt wird.

Ein Bewegungszyklus wird in diesem Zusammenhang als die Bewegung definiert, mit der eine vorher beschriebene wiederkehrende Aufgabe im Gesamten ausgeführt werden kann und von der aus beginnend ein neuer Zyklus nahtlos beginnen kann.

Ein Abschnitt innerhalb eines Bewegungszyklus ist dann umlaufend, wenn zumindest ein Antrieb eine Bewegung über einen Streck- oder Decklage hinaus ausführt.

Vorteilhafterweise können dann konventionelle Steuerungsbefehle für den schwenkenden Bereich übernommen werden, was eine weite Verbreitung und eine flexible Nutzung des Parallelroboters erlaubt. Der erhöhte Steuerungsaufwand ist für den umlaufenden Betrieb auf den umlaufenden Abschnitt beschränkt. Somit müssen die auftretenden Streck- und Decklagen und die damit verbundenen Beschränkungen in der Bewegungsausführung allein im umlaufenden Abschnitt beachtet werden, es ergibt sich eine Reduktion der Komplexität. Beschränkungen im umlaufenden Betrieb sind z.B. dass sich in der Nähe von Streck- und Decklagen Geschwindigkeitsanforderungen am Referenzpunkt (TCP) nicht einhalten lassen.

Gegenüber einer Hin- und Herbewegung bzw. einer schwenkenden Bewegung der Antriebseinrichtung hat die fortlaufende Bewegung den Vorteil, dass die Antriebseinrichtung durch den Wegfall des Beschleunigungs- und Abbremsvorgangs der Antriebseinrichtung selbst weniger belastet wird. Zumeist stellt die Antriebseinrichtung einen nicht geringfügigen Teil des gesamten Roboter-Trägheitsmomentes dar, somit kann ein Teil der nötigen aufzubauenden Bewegungsenergie eingespart werden. Wird zudem als Antriebseinrichtung eine Kombination aus Motor und Getriebe verwendet, führt die umlaufende Bewegungsweise zu einer gleichmäßigen Belastung des Getriebes durch einen deutlich höheren Bewegungswinkel am Getriebeabtrieb (und damit Oberarmgelenk)und somit auch zu einem gleichmäßigeren Verschleiß . So erhöht sich die am Getriebeabtrieb im Eingriff befindliche Anzahl an Zähnen der Zahnradpaarung, womit die Beanspruchung der Einzelzähne sinkt.

Unter anderem werden zudem Spitzenbelastungen an denjenigen Stellen im Getriebe, die im Moment der Richtungsumkehr der Antriebseinrichtung Kräfte übertragen, werden vermieden.

Die Erfindung wird anhand von Ausführungsbeispielen und der Zeichnung näher beschrieben. In der Zeichnung zeigen

Fig. 1 ein erstes Ausführungsbeispiel der vorliegenden Erfindung;
Fig. 2 eine Draufsicht auf die erste kinematische Struktur;
Fig. 3 ein Diagramm zur Umlauffähigkeit;
Fig. 4 Ausführungsbeispiele eines dreiarmigen Parallelroboters (Deltaroboter) mit nicht-paralleler Drehachse;
Fig. 5 eine 90-Grad-Anordnung der Drehachse;
Fig. 6 ein Ausführungsbeispiel, bei dem die Drehachse der Antriebsvorrichtung parallel zur zugehörigen Oberarmachse ist;
Fig. 7 eine Variante einer zentrischen kardanischen Anordnung zweier Gelenke der zweiten kinematischen Struktur mit integrierter Umlauffähigkeit;
Fig. 8 zeigt zwei Varianten einer exzentrischen kardanischen Anordnung;
Fig. 9 eine zweite kinematische Struktur mit zwei sphärischen Lager in verspannter Bauweise;
Fig. 10 einen Schnitt durch ein Pleuel mit Halbschalenlagern;
Fig. 11 eine erste kinematischen Struktur mit Unterarmen in Doppelanordnung; und
Fig. 12 eine grafische Beschreibung des Achsraums eines Roboters mit zwei Antrieben.

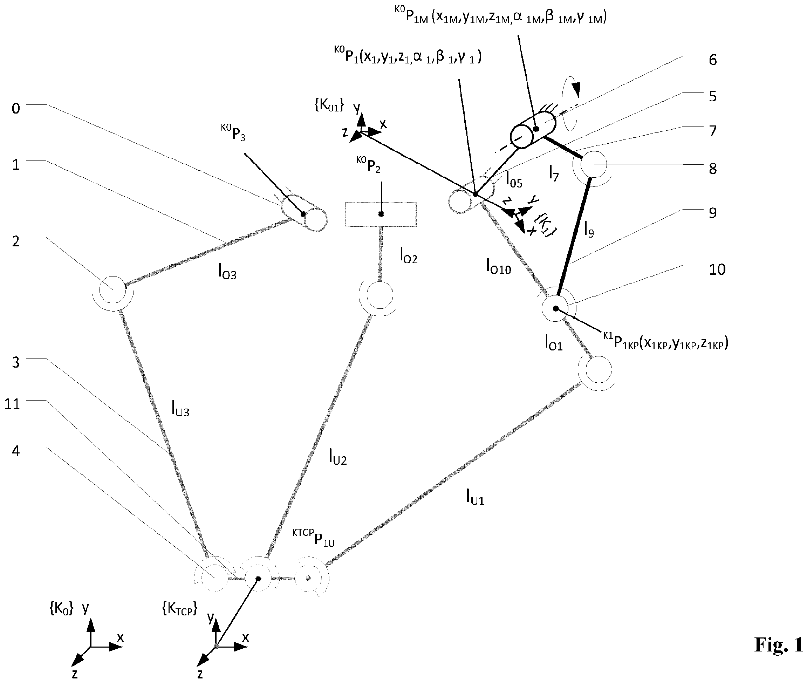

Fig. 1 zeigt als erstes Ausführungsbeispiel der vorliegenden Erfindung einen Parallelroboter. Fig. 1 illustriert eine Seitenansicht auf den Parallelroboter. Der Parallelroboter ist gebildet durch eine erste kinematische Struktur 0, 1, 2, 3, 4 und eine zweite kinematische Struktur 6, 7, 8, 9, wobei die erste kinematische Struktur drehbar gestellfest angelenkt ist und die zweite kinematische Struktur gestellfest fixiert ist und die erste kinematische Struktur die Werkzeugplattform 11 zur Aufnahme eines Werkzeugs aufweist und die zweite kinematische Struktur die zumindest eine Antriebseinrichtung 6 zum Antrieb der ersten kinematische Struktur aufweist, wobei die erste kinematische Struktur und die zweite kinematische Struktur nur über zumindest ein Koppelgelenk 10 miteinander gekoppelt sind, die erste kinematische Struktur und die zweite kinematische Struktur voneinander gliederfremd sind und die zumindest eine Antriebseinrichtung 6 umlauffähig ausgestaltet ist.

Die erste kinematische Struktur (Grundstruktur) umfasst bei diesem Ausführungsbeispiel drei parallele kinematische Ketten bzw. Stränge, es handelt sich um einen Deltaroboter. Jede der drei kinematischen Ketten umfasst einen Oberarm 1, also $l_{O1}$, $l_{O2}$ bzw. $l_{O3}$ und einen Unterarm 3, also $l_{U1}$, $l_{U1}$, bzw. $l_{U3}$, wobei jeder Oberarm 1 an einem Ende mittels jeweils eines Oberarmgelenks 0 an Punkten $^{KO}P_1$, $^{KO}P_2$, bzw. $^{KO}P_3$ gestellfest angeordnet ist, an einem zweiten Ende mittels je eines Unterarmgelenks 2 mit einem ersten Ende des Unterarms 3 verbunden ist und der Unterarm 3 an seinem zweiten Ende mittels je eines Handgelenks 4 mit der Werkzeugplattform 11 gekoppelt ist.

Von der zweiten kinematischen Struktur ist der Übersichtlichkeit halber nur die Antriebseinrichtung 6 einer einzigen kinematischen Kette gezeigt, und zwar derjenigen mit dem Oberarm $l_{O1}$. Den beiden anderen Oberarmen $l_{O2}$, $l_{O3}$ der ersten kinematischen Struktur ist ebenfalls je eine Antriebseinrichtung 6 zugeordnet. Die Antriebseinrichtung 6 ist gestellfest fixiert in der Pose $^{KO}P_{1M}$.

Die zur Beschreibung der Posen, z.B. $^{K0}P_{1..n}(x_{1..n},y_{1..n},z_{1..n},\alpha_{1..n},\beta_1,\gamma_{1..n})$, benötigten vollständigen Koordinaten $x_{1..n},y_{1..n},z_{1..n},\alpha_{1..n},\beta_1,\gamma_{1..n}$ in den einzelnen Koordinatensystemen, also z.B. für *n* Parallelstrukturen, werden im Folgenden weggelassen. Mit z.B. $^{K0}P_{1..n}$ werden - je nach Kontext -auch nur Punkte bezeichnet. Auch dann werden im Folgenden die Koordinaten $x_{1..n}, y_{1..n}, z_{1..n}$ weggelassen.

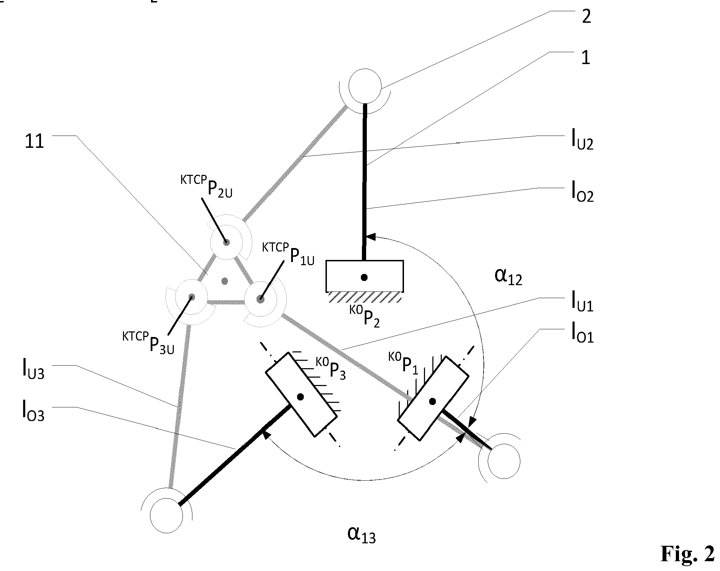

Fig. 2 zeigt eine Draufsicht auf die erste kinematische Struktur des Deltaroboters 3-RRR; die zweite kinematische Struktur ist weggelassen. Die Drehachse $^{KO}P_1$ des ersten Oberarms $l_{O1}$ steht in einem Winkel $\alpha_{12}$ zur Drehachse $^{KO}P_2$ des zweiten Oberarms $l_{O2}$ bzw. in einem Winkel $\alpha_{13}$ zur Drehachse $^{KO}P_3$ des dritten Oberarms $l_{O3}$. Die Werkzeugplattform 11 ist an den drei Unterarmen $l_{U1}$, $l_{U2}$ bzw. $l_{U3}$ an den Enden $^{KTCP}P_{1U}$, $^{KTCP}P_{2U}$, $^{KTCP}P_{3U}$ über Gelenke angelenkt.

Als Werkzeuge, die an der Werkzeugplattform angebracht sein können, kommen beliebige Effektoren in Frage, also z.B. Greifer, in Frage.

Jede der drei zweiten kinematischen Strukturen umfasst je eine Antriebseinrichtung 6 und ein daran gekoppeltes Vorgetriebe. Jede Antriebseinrichtung 6 umfasst einen Motor mit einer Drehachse. Jedes Vorgetriebe umfasst eine Kurbel 7, ein Pleuel 9 und ein zwischen den beiden letzteren angeordnetes Gelenk 8, wobei die Anzahl an Elementen je nach Ausführungsvariante in Bezug auf die Lagerung größer sein kann. Das Vorgetriebe koppelt je eine Antriebseinrichtung 6 über das Koppelgelenk 10 mit je einem Oberarm 1. Das jeweilige Koppelgelenk 10 ist am betreffenden Oberarm 1, also $l_{O1}$, $l_{O2\ bzw.}$ $l_{O3}$, angeordnet.

Die Koppelgelenke 10 stellen die einzigen (kinematischen) Verbindungen der beiden kinematischen Strukturen dar, sieht man natürlich von dem festen Gestell ab, an welchem beide kinematischen Strukturen fixiert sind.

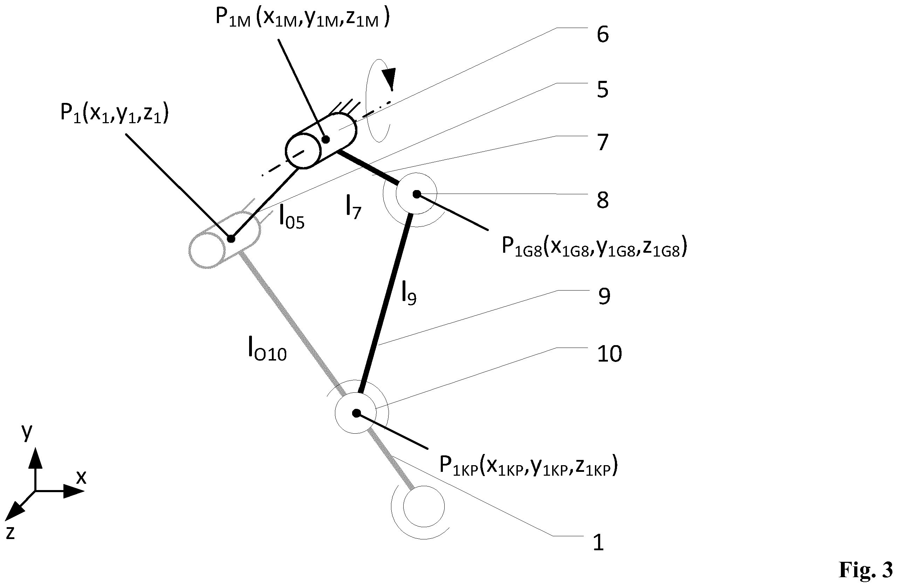

Mit Bezug auf Fig. 3 wird die Umlauffähigkeit näher beschrieben. Die Umlauffähigkeit jeder der Antriebseinrichtungen 6 wird hier dadurch gewährleistet, dass die Kurbel 7 umlauffähig ist, sich also um Vielfache von 360 Grad drehen kann, und zwar um die Motordrehachse der jeweiligen Antriebseinrichtung 6. Die Umlauffähigkeit ist erfüllt, wenn für alle Stellungen des Koppelpunktes $P_{1KP}$, also des Punktes auf dem Oberarm 1, an welchem das Koppelgelenk 10 angeordnet ist, mindestens eine Lösung für die jeweilige Stellung der Kurbel 7 mit dem Vorgetriebe vorliegt, und damit die Vektorgleichung

$$\overrightarrow{P_{1M}P_1} + \overrightarrow{P_1P_{1KP}} = \overrightarrow{P_{1M}P_{1G8}} + \overrightarrow{P_{1G8}P_{1KP}}$$

erfüllt ist. Hierin ist

$\overrightarrow{P_{1M}P_1}$      der Vektor vom Drehpunkt $P_{1M}$ der gestellfesten Antriebseinrichtung 6 zum Drehpunkt $P_1$ der gestellfesten Oberarmlagerung 0;

$\overrightarrow{P_1P_{1KP}}$      der Vektor vom Drehpunkt $P_1$ der gestellfesten Oberarmlagerung 0 zum Drehpunkt des Koppelgelenks 10 auf dem Oberarm 1;

$\overrightarrow{P_{1M}P_{1G8}}$      der Vektor vom Drehpunkt $P_{1M}$ der gestellfesten Antriebseinrichtung 6 zum Drehpunkt $P_{1G8}$ des Gelenks 8 zwischen Kurbel 7 und Pleuel 9; und

$\overrightarrow{P_{1G8}P_{1KP}}$      der Vektor v m Drehpunkt $P_{1G8}$ des Gelenks 8 zwischen Kurbel 7 und Pleuel 9 zum Drehpunkt des Koppelgelenks 10 auf dem Oberarm 1.

Im speziellen Fall eines ebenen Vorgetriebes, wobei die Kurbel 7 das kürzeste Glied (mit der Länge $l_7$) sei, $l_{05}$ der Abstand zwischen dem Drehpunkt der gestellfesten Oberarmlagerung 0 und dem Drehpunkt der gestellfesten Antriebseinrichtung 6 sei, $l_9$ die Länge des Pleuels 9 sei und $l_{010}$ die Distanz zwischen dem Drehpunkt der gestellfesten Oberarmlagerung 0 und dem Drehpunkt des Koppelgelenks 10 auf dem Oberarm 1, vereinfacht sich die obige Bedingung zu:

$$l_{max} + l_7 \leq l' + l'',$$

mit

$l_{max}$      als längstes Glied aus los, $l_9$, $l_{010}$, wobei
$l'$, $l''$      als die Längen der übrigen beiden Glieder.

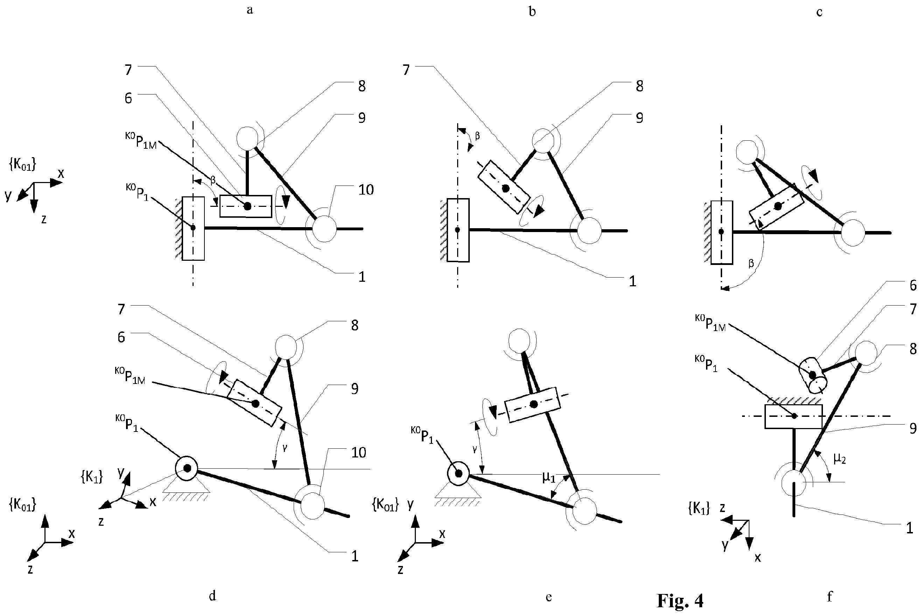

Vorteilhaft ist es, wenn die Übertragungswinkel $\mu_1$ und $\mu_2$, also die Winkel zwischen dem Pleuel 9 und der Verbindungslinie des Drehpunkts $P_1$ der gestellfesten Oberarmlagerung 0 und des Drehpunkts $P_{1KP}$ des Koppelgelenks 10 auf dem Oberarm 1 (also die Linie in Richtung des Vektors $\overrightarrow{P_1P_{1KP}}$), bei der umlaufenden Bewegung der Kurbel 7 niemals kleiner als 20 Grad werden, vgl. Fig. 4e, f. $\mu_1$ bezeichnet hierbei den in der x-y-Ebene des Koordinatensystems $\{K_{01}\}$ im Oberarmgelenk in der Pose $^{KO}P1$ liegenden in diese Ebene projizierten Übertragungswinkel, $\mu_2$ den in die z-x-Ebene des Oberarm-Koordinatensystems $\{K_1\}$ im Oberarmgelenk liegenden in diese Ebene projizierten Übertragungswinkel. Dann ist bei jeder Bewegung eine ausreichende Kraftübertragung auf den Oberarm gewährleistet, und die maximal auftretenden Kräfte bleiben in technisch vernünftigen Grenzen.

Je nach Lage der Drehachse der Antriebseinrichtung 6 zur Längsachse des zugehörigen Oberarms 1 lassen sich unterschiedliche Konfigurationen des Parallelroboters realisieren, insbesondere bei dreiarmigen Parallelrobotern.

Fig. 4 zeigt Ausführungsbeispiele eines dreiarmigen Parallelroboters (Deltaroboter) mit nicht-paralleler Drehachse jeder Antriebseinrichtung 6 zur Drehachse des zugehörigen Oberarms 1. Es sind in der oberen Zeile in der Draufsicht auf den Strang drei Varianten mit jeweils unterschiedlichem Winkel $\beta$ zwischen Drehachse (durch Punkt $^{K0}P_{1M}$ verlaufend) der Antriebseinrichtung 6 und Oberarmdrehachse (durch Punkt $^{K0}P_1$ verlaufend) ge-

zeigt. Bei diesen Ausführungsbeispielen muss der Freiheitsgrad des Vorgetriebes mindestens drei, inkl. des Koppelgelenks mindestens fünf betragen. Hierbei kommt ein Freiheitsgrad von mindestens zwei für das Koppelgelenk 10 am Oberarm 1 zum Tragen, wobei ein Freiheitsgrad auf das Vorgetriebe entfallen kann, also $l_{O1}$, $l_{O2}$ bzw. $l_{O3}$. Diese Konfiguration bietet einen Bauraumvorteil im Vergleich zu einer Anordnung, bei der die Drehachse der Antriebseinrichtung 6 parallel zu der Oberarmachse ist, speziell eine platzsparende Anordnung der drei kinematischen Ketten in einem zentralen Gestell.

Die untere Zeile zeigt in der Seitenansicht auf einen Strang zwei weitere Anordnungen mit dem Neigungswinkel γ zwischen Drehachse (durch Punkt $^{K0}P_{1M}$ verlaufend) der Antriebseinrichtung 6 und Oberarmdrehachse (durch Punkt $^{K0}P_1$ verlaufend). Bei der Anordnung nach Abbildung d ist die Antriebachse nach untern geneigt, bei der Anordnung nach Abbildung e ist die Antriebsachse nach oben geneigt.

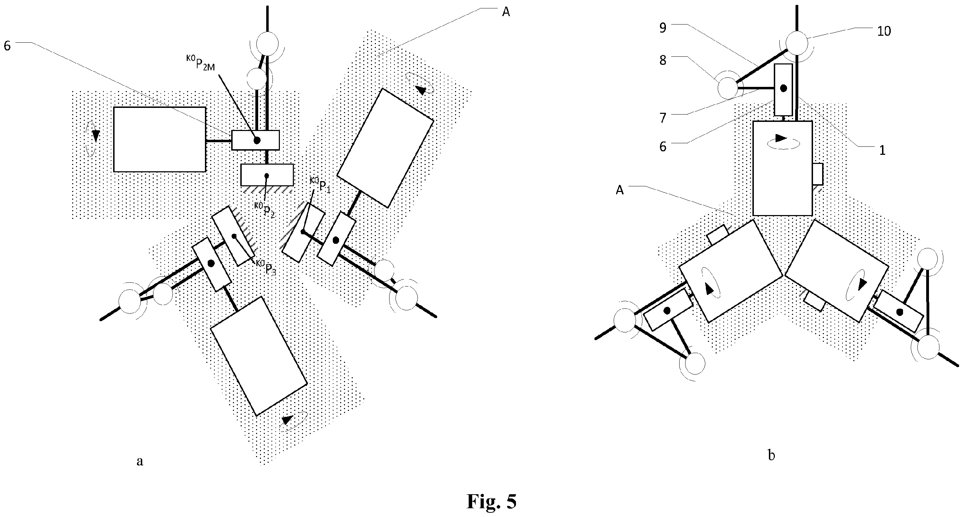

Besonders vorteilhaft ist es, wenn der Winkel β zwischen der Drehachse der Antriebseinrichtung 6 und der zugehörigen Oberarmachse 90 Grad beträgt, wie in der mittleren Abbildung gezeigt ist. Dann lässt sich platzsparend eine vollkommen symmetrische Sternkonfiguration realisieren, vgl. Fig. 5b. Die für die Anordnung der zweiten kinematischen Struktur benötigte Fläche A auf einem zentralen Gestell (vgl. Fig. 5b) wird im Vergleich zu einer Konfiguration mit einem Winkel β von null Grad (Fig. 5a) minimiert.

Andererseits können bei Verwendung eines zentralen Gestells die Lage und die Winkel $\alpha_{12}$ und $\alpha_{13}$ der einzelnen Stränge der ersten kinematischen Struktur zueinander je nach vorgesehenem Einsatzzweck des Parallelroboters einfach verändert werden.

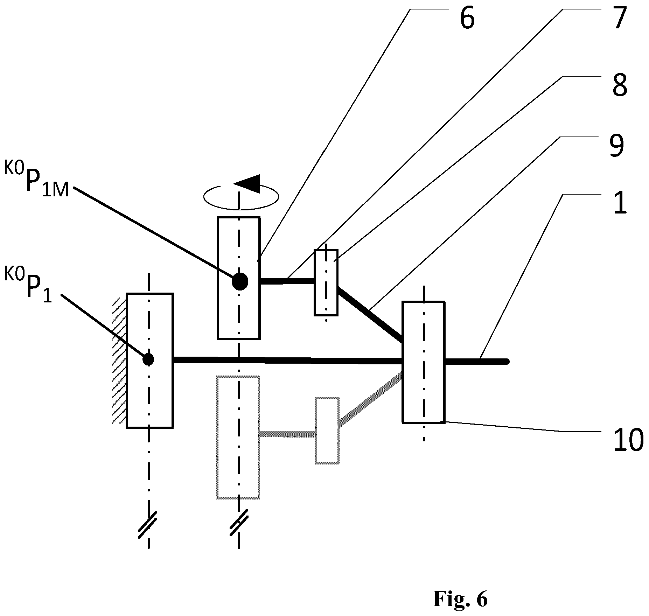

Fig. 6 zeigt ein Ausführungsbeispiel eines dreiarmigen Parallelroboters, bei dem die Drehachse (durch Pose $^{K0}P_{1M}$ verlaufend) der Antriebsvorrichtung 6 parallel zur zugehörigen Oberarmachse (durch Pose $^{K0}P_1$ verlaufend) ist. Bei diesem Ausführungsbeispiel muss der Freiheitsgrad des Vorgetriebes 7, 8, 9 mindestens zwei betragen. Hinzu kommt ein Freiheitsgrad von mindestens eins für das Koppelgelenk auf dem Oberarm. Diese Konfiguration ermöglicht den Einsatz von Gelenken mit weniger Freiheitsgraden im Vergleich zur Konfiguration mit nicht-paralleler Anordnung der Drehachse.

Im Folgenden werden Anordnungen mit verschiedenen Gelenken der zweiten kinematischen Struktur beschrieben.

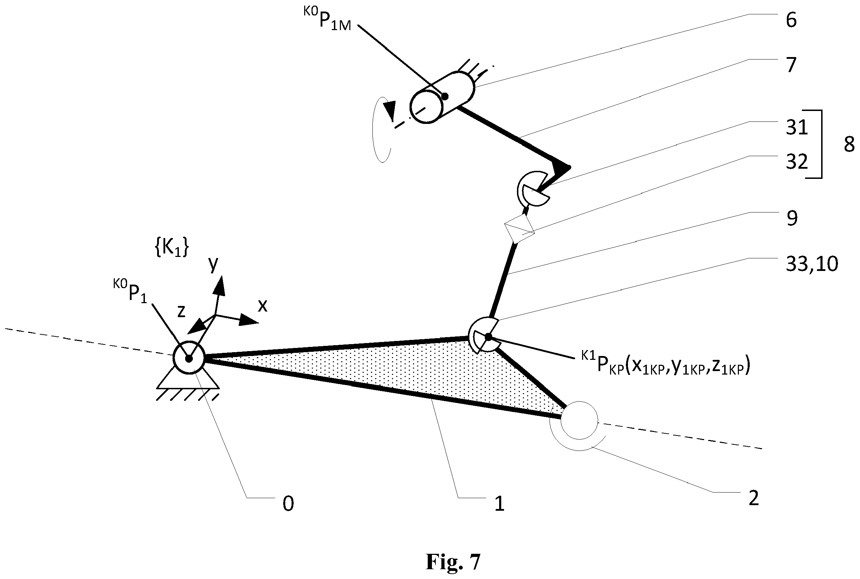

Fig. 7 zeigt eine Variante einer zentrischen kardanischen Anordnung zweier Gelenke der zweiten kinematischen Struktur mit integrierter Umlauffähigkeit. Das kardanische Gelenk 31 koppelt Kurbel 7 und Pleuel 9, das kardanische Gelenk 33 koppelt Pleuel 9 und Oberarm 1. Vorteilhaft unter dem Gesichtspunkt des Verschleißes ist es, wenn als umlauffähiges kardanisches Lager ein Wälzlager gewählt wird. Somit ist ein Teil des Lagers 31 als Wälzlager ausgestaltet. Vorteilhaft unter dem Gesichtspunkt des Gewichts und der Steifigkeit der Lagerung ist es, wenn das andere kardanische Lager, also hier das Lager 33, als Gleitlageranordnung ausgeführt ist. Ein Freiheitsgrad ist durch das Drehgelenk 32 realisiert, das sich in der Stabachse des Pleuels 9 befindet. Das Gelenk 8 wird hier also durch die Lager 31 und 32 gebildet.

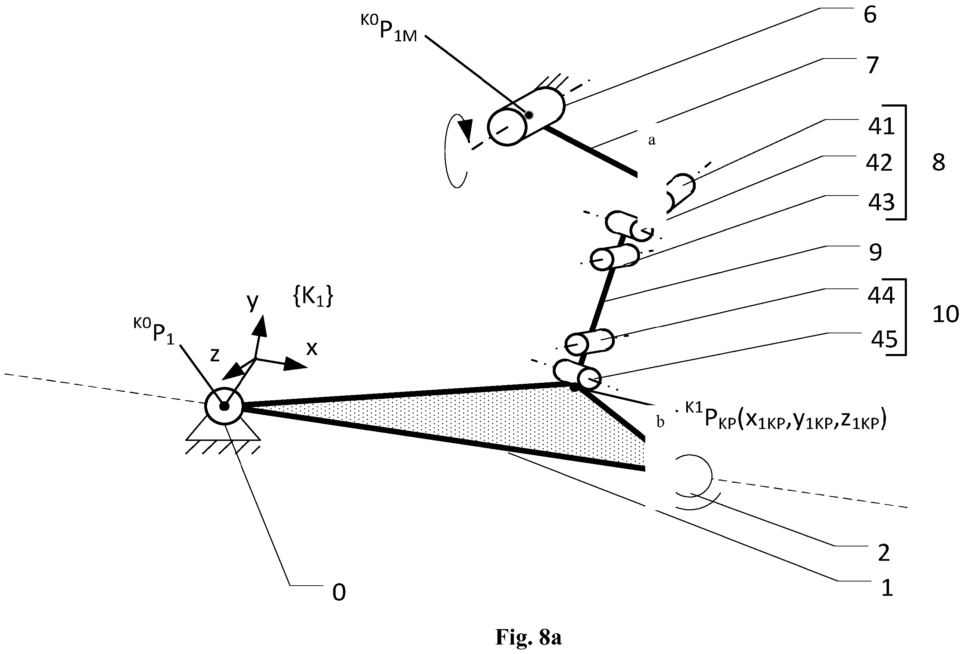

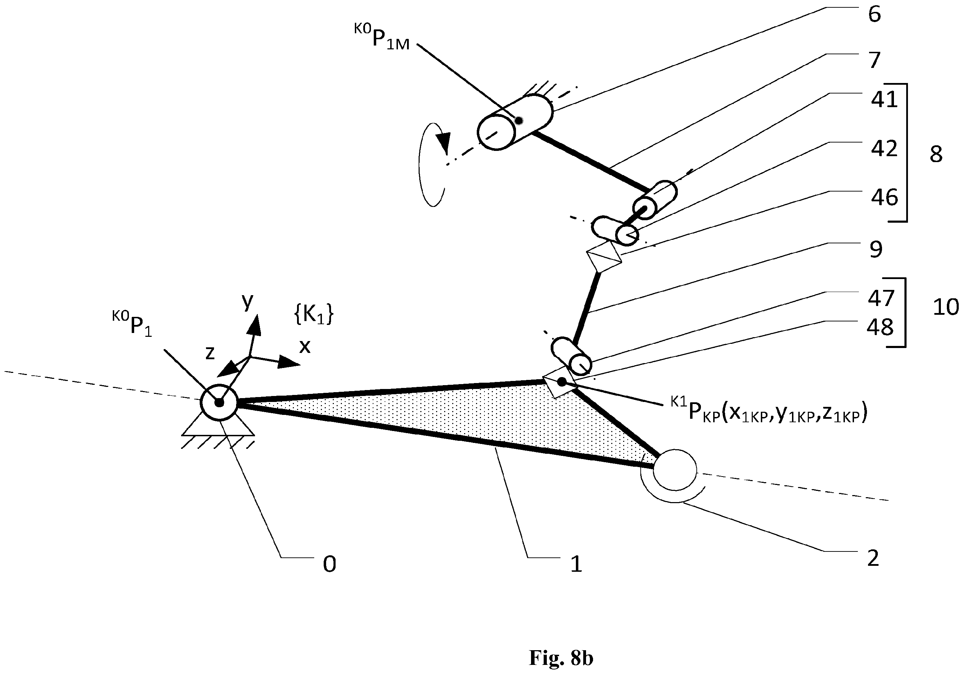

Fig. 8 zeigt zwei Varianten einer exzentrischen kardanischen Anordnung. Der Gesamtfreiheitsgrad der zweiten kinematischen Struktur inkl. des Koppelgelenks 10, also der Antriebseinrichtung 6 mit dem Vorgetriebe 7, 8, 9 inkl. des Koppelgelenks 10, kann durch eine exzentrische kardanische Ausführung der Gelenke 42, 43 bzw. 44, 45 an den Enden des Pleuels 9 realisiert werden, vgl. Fig. 8a. Diese Maßnahme dient der Erhöhung der Steifigkeit im Vergleich zu einem zentrischen Gelenk, vgl. Fig. 7, und auch der Lagerlebensdauer durch Erhöhung des Bauraumes für die Gelenke.

Bei diesem Ausführungsbeispiel kann ein rotativer Freiheitsgrad der exzentrischen kardanischen Anordnung umlauffähig gestaltet sein. Sofern die exzentrische kardanische Anordnung selbst nicht umlauffähig ausgestaltet ist, ist der 5. Freiheitsgrad als rotativer umlauffähiger Freiheitsgrad vorzusehen, um die Umlauffähigkeit der zweiten kinematischen Struktur zu gewährleisten, vgl. wiederum Fig. 8a. Dort bezeichnet Bezugszeichen 41 das Gelenk, welches den umlaufenden Freiheitsgrad bewirkt.

Falls in der kardanischen Anordnung Gleitlager eingesetzt werden, so ist ein zusätzlicher umlaufender wälzgelagerter Freiheitsgrad oder die Ausführung des umlaufenden Freiheitsgrades mit Wälzlagern in der kardanischen Anordnung vorteilhaft, um die Relativgeschwindigkeit und damit den Verschleiß in den Gleitlagern zu reduzieren, vgl. Fig. 8a. In Fig. 8a ist mit 41 der zusätzliche wälzgelagerte Freiheitsgrad illustriert; in Fig. 8b sind Wälzlager zur Realisierung des umlaufenden Freiheitsgrads vorgesehen.

Das Gelenk 8 wird hier also durch die Lager 41, 42 und 43 gebildet, das Koppelgelenk 10 wird durch die Lager 44 und 45 gebildet.

Fig. 8b zeigt die zweite Variante einer exzentrischen Anordnung. Hier ist ein Drehfreiheitsgrad in den Pleuel 9 integriert, und zwar als axiales Drehgelenk 46. Ein weiteres Drehgelenk 48 ist am Ende des Pleuels 9 angeordnet. Diese Drehgelenke 46, 48 bieten einen Bauraum- und Gewichtsvorteil, weil sie in die Stabachse des Pleuels 9 bzw. als Koppelgelenk 10 in den Oberarm integriert sind. Eine Gabel oder dergleichen kann vermieden werden.

Das Gelenk 8 wird hier also durch die Lager 41, 42 und 46 gebildet, das Koppelgelenk 10 wird durch die Lager 47 und 48 gebildet.

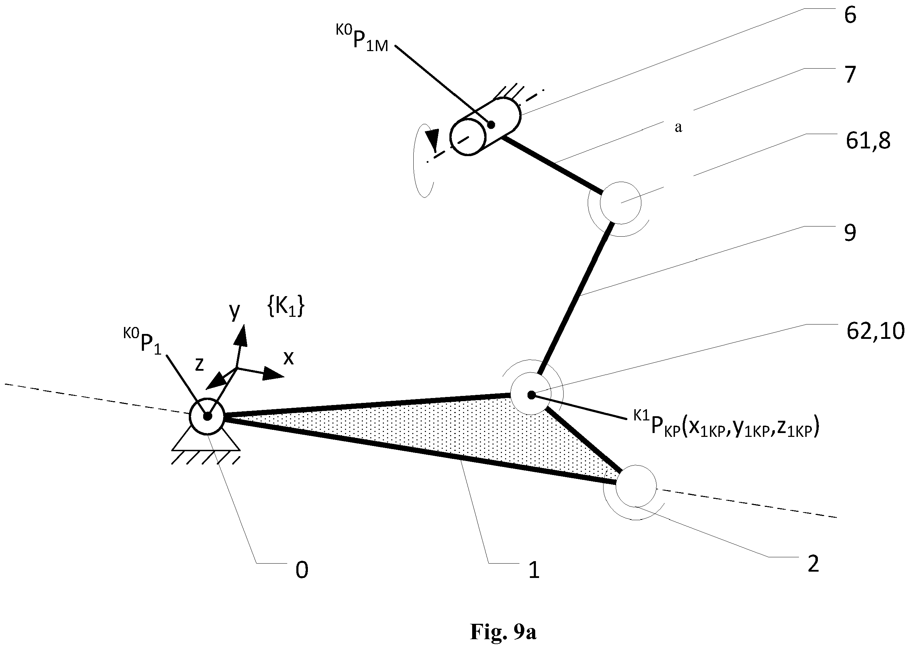

Bei einem weiteren Ausführungsbeispiel, das in Fig. 9a gezeigt ist, weist die jeweilige zweite kinematische Struktur zumindest ein Gelenk 61 mit sphärischen Lagern auf, insbesondere bei Einbeziehung des Koppelgelenks 10 zumindest zwei sphärische Lager 61, 62, also mit zwei sphärischen Kugelkörpern in in sich verspannter Bauweise. Die Verspannung könnte auch durch zwei verspannte parallel Streben mit separaten sphärischen Kugelkörpern an den Enden hergestellt werden.

Das Gelenk 8 wird hier also durch das Lager 61 gebildet, das Koppelgelenk 10 wird durch das Lager 62 gebildet.

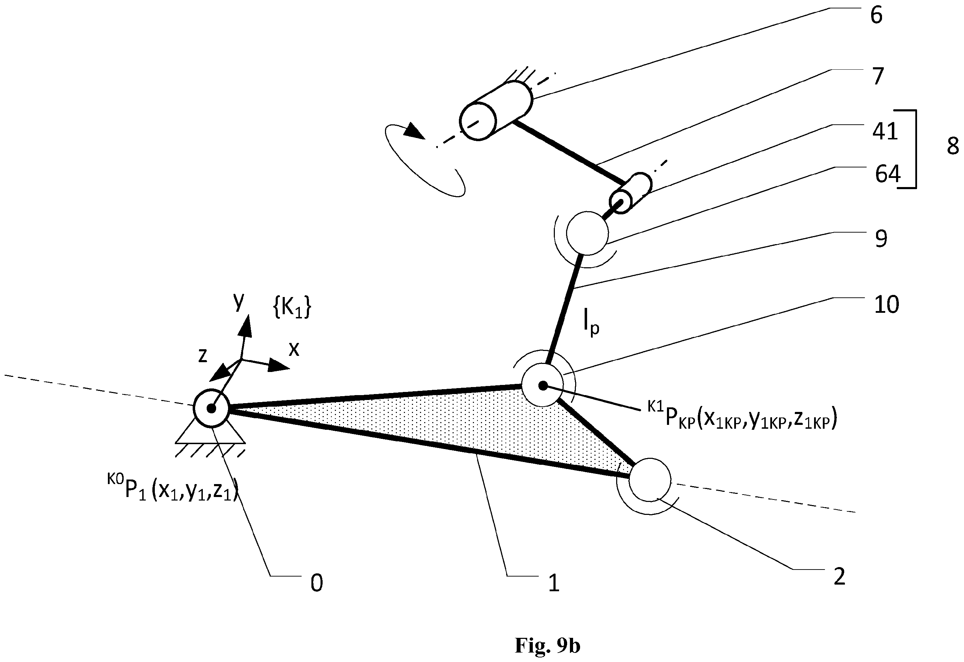

Auch hier kann die zweite kinematische Struktur zusätzlich zu dem zumindest einen Gelenk mit sphärischem Lager 61 ein rotatives Gelenk 41 (Fig. 9b) aufweisen, um die Relativgeschwindigkeit und damit den Verschleiß bei der umlaufenden Antriebsweise in den sphärischen Gelenken 61, 62 des Vorgetriebes zu reduzieren.

Das Gelenk 8 wird hier also durch die Lager 41 und 64 gebildet.

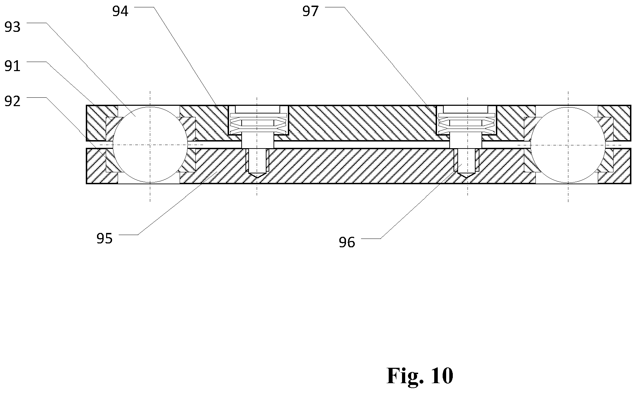

In Fig. 10 illustrieren 91, 92 mit den Kugelkörpern 93 das Gelenk mit sphärischen Lagern bei in sich verspannter Anordnung.

Das jeweilige sphärische Lager 61, 62 ist bei einer vorteilhaften Ausbildung als zwei gegenseitig verspannte Halbschalen-Gleitlager 91, 92 mit einem sphärischen Gegenkörper 93 ausgestaltet, wie in Fig. 10 illustriert ist. Dort kann zumindest ein Glied der zweiten kinematischen Struktur, vorzugsweise das als Pleuel 9 ausgestaltete Glied, derart ausgeführt sein, dass die Körper 94, 95, welche die Halbschalen 91, 92 aufnehmen, an jeder Lagerseite auf nur einen sphärischen Gegenkörper 93, 94 wirken und mit Hilfe einer Verspanneinrichtung 97 zum Zweck der Spielreduktion und Verschleißnachstellung versehen sind.

Die Verspanneinrichtung 97 ist vorzugsweise durch eine Tellerfeder-/Bolzen-Anordnung ausgeführt. Weiter vorzugsweise kann ein Freiheitsgrad durch ein zusätzliches Drehgelenk durch die Mitte eines sphärischen Gegenkörpers gesperrt werden.

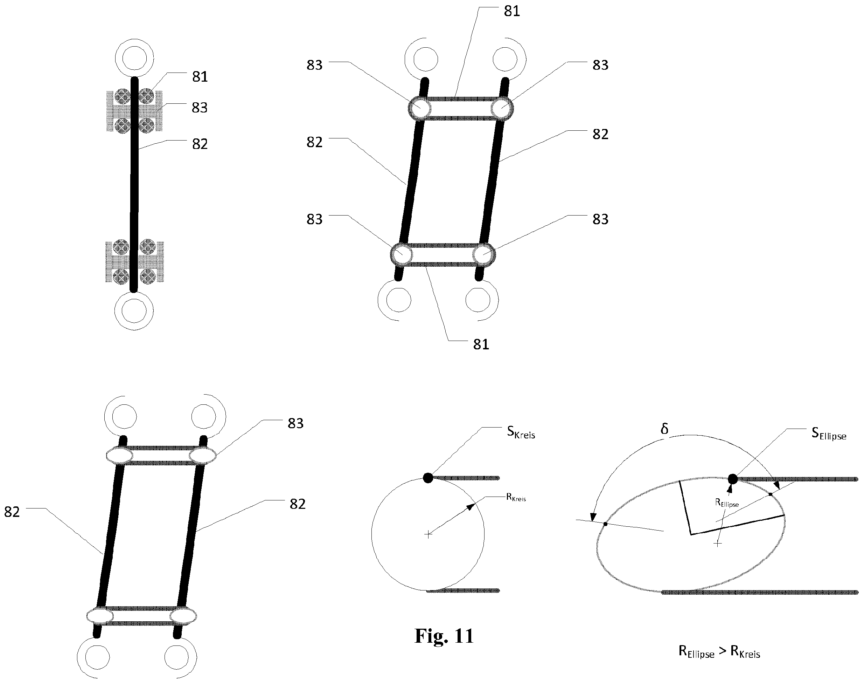

Fig. 11 zeigt ein Ausführungsbeispiel, bei dem jeder Unterarm 3 der ersten kinematischen Struktur in Doppelanordnung ausgebildet ist und durch sphärische Lager mit den angrenzenden Elementen verbunden ist. Hier ist ein Zugmittel 81 zur Verspannung der beiden Unterarmteile 82 vorgesehen. Als Zugmittel 81 kann ein Riemen vorgesehen sein, der über Riemenscheiben 83 die jeweils an den Unterarmteilen 82 angebracht sind, geführt ist. Die Riemenscheiben 83 können als nichtkreisförmige Laufscheiben ausgestaltet sein, insbesondere als elliptische Scheiben. Doch auch andere Krümmungsfunktionen sind möglich. Dann kann die Beanspruchung des Zugmittels 81 im maßgeblichen Schwenkbereich durch die Reduktion der Krümmung gesenkt werden. Der Schwenkbereich ist bei umlaufendem Parallelroboter i.d.R. kleiner, da der Umlauf feste Endlagen bewirkt und somit der Schwenkbereich des Oberarms im Vergleich mit einem direkten motorischen Antrieb des Oberarms 1 eingeschränkt ist. Hiermit weisen die Unterarmgelenke der ersten Kinematik einen geringeren Schwenkbereich auf, wodurch im Besonderen die Anwendung elliptischer Riemenscheiben 83 sinnvoll ist, da der zu modifizierende Abschnitt auf der Riemenscheibe geringer ist und die Biegung des Riemens durch die geringere Krümmung im Schwenkbereich gegenüber einer vergleichbar großen kreisrunden Riemenscheibe 83 am Einlaufpunkt des Riemens 81 reduziert wird. Zudem werden das Gewicht und die Abmessungen der Riemenscheiben 83 durch dieses Vorgehen reduziert.

Der erfindungsgemäße Parallelroboter ist so ausgestaltet, dass durch die Streck- und Decklagen an den Arbeitsraumgrenzen hohe Kräfte auf das an der Werkzeugplattform angebrachte Werkzeug übertragen werden können und somit neben einer Handhabungsfunktion auch hohe statische Kräfte in der Nähe dieser Streck- und Decklagen aufgebracht werden können.

Die drei Antriebseinrichtungen 6 sind mit einer Steuerungseinrichtung wirkverbunden, welche die Antriebseinrichtungen 6 so ansteuert, dass diese jeweils eine fortlaufende oder pilgerschrittartige Bewegung über Streck- und Decklagen des Vorgetriebes hinweg ausführen können, derart, dass die Werkzeugplattform 11 eine Bewegung zwischen mindestens zwei Arbeitspunkten A, B innerhalb eines Arbeitsraumes ausführt.

Hierbei werden die Bewegungen durch die Steuerungseinrichtung vorzugsweise im Achsraum berechnet, und damit werden die prinzipbedingten Singularitäten der Vorgetriebe (also deren Streck- und Decklagen) durchfahren und zur Erreichung positiver leistungsrelevanter Kriterien wie geringeres Motoreffektivmoment genutzt.

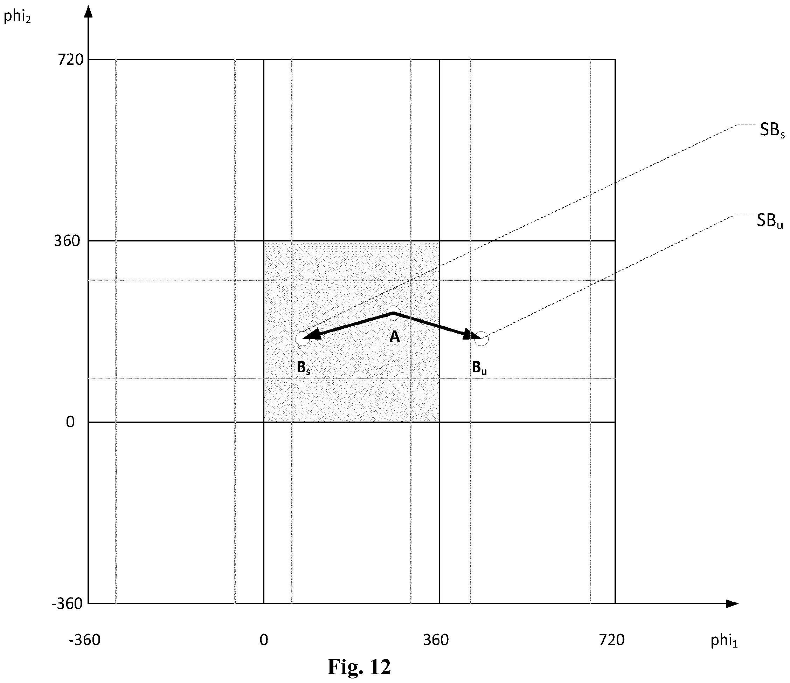

Die umlauffähige Betriebsweise bewirkt, dass sich die Motoren der Antriebseinrichtungen 6 um Vielfache von 360 Grad in eine Richtung drehen können. Die Motoren müssen also für die Realisierung einer Hin- und Herbewegung der Werkzeugplattform ihre Drehrichtung vorzugsweise nicht ändern. Aus diesem Grund kann die Bewegung im Achsraum so geplant werden, dass über einen vollen 360-Grad-Umlauf die gleichen Endpositionen A, B der Werkzeugplattform 11 im Arbeitsraum angefahren werden können wie sonst bei schwenkender Arbeitsweise. Fig. 12 zeigt eine grafisch vereinfachte Beschreibung des Achsraumes eines Roboters mit zwei Antrieben, wobei die beiden linken Punkte A nach $B_s$ Endpositionen im Achsraum darstellen, die im schwenkenden Betrieb, also mit einem herkömmlichen nicht umlauffähigen Roboter erreicht werden können (direkte Verbindungslinie). Für den umlaufenden Betrieb mit einem Roboter gemäß der Erfindung kann die 360-Grad-Grenze überschritten und so auf kurzem Weg bzw. vorteilhaftem Weg in die Endstellung $B_u$ gelangt werden. A und B sind im Achsraum periodisch, d.h. mehrmals vorhanden aufgrund der fortlaufenden Betriebsweise.

**Patentansprüche**

1. Parallelroboter mit zumindest einer Antriebseinrichtung (6) und einer Werkzeugplattform (11) zur Ankopplung zumindest eines Endeffektors, wobei der Parallelroboter durch eine erste kinematische Struktur und eine zweite kinematische Struktur gebildet ist, wobei die erste kinematische Struktur drehbar gestellfest angelenkt ist und die zweite kinematische Struktur gestellfest fixiert ist und die erste kinematische Struktur die Werkzeugplattform (11) aufweist und die zweite kinematische Struktur die zumindest eine Antriebseinrichtung (6) aufweist und zum Antrieb der ersten kinematische Struktur ausgestaltet ist, wobei die erste kinematische Struktur und die zweite kinematische Struktur nur über zumindest ein Koppelgelenk (10) miteinander gekoppelt sind, die erste kinematische Struktur und die zweite kinematische Struktur voneinander gliederfremd sind und die zumindest eine Antriebseinrichtung (6) umlauffähig ausgestaltet ist,

wobei die erste kinematische Struktur zumindest zwei parallele kinematische Stränge umfasst, deren jeder zumindest einen Oberarm (1) und zumindest einen Unterarm (3) umfasst, wobei der Oberarm an einem Ende mittels jeweils eines Oberarmgelenks (0) gestellfest angeordnet ist, an einem zweiten Ende mittels je eines Unterarmgelenks (2) mit einem ersten Ende des Unterarms verbunden ist und der Unterarm an seinem zweiten Ende mit der Werkzeugplattform (11) gekoppelt ist

wobei die zweite kinematische Struktur ein Vorgetriebe umfasst, das zwischen Antriebseinrichtung (6) und Koppelgelenk (10) angeordnet ist, wobei das Vorgetriebe eine Kurbel (7) und ein Pleuel (9) und ein Gelenk (8) zwischen Kurbel (7) und Pleuel (9) umfasst und wobei die Kurbel (7) umlauffähig ist **dadurch gekennzeichnet, dass** für alle Stellungen des Punktes auf dem Oberarm (1), an welchem das Koppelgelenk (10) angeordnet ist, mindestens eine Lösung für die jeweilige Stellung der Kurbel (7) mit dem Vorgetriebe vorliegt, und damit die Vektorgleichung

$$\overrightarrow{P_{1M}P_1} + \overrightarrow{P_1P_{1KP}} = \overrightarrow{P_{1M}P_{1G8}} + \overrightarrow{P_{1G8}P_{1KP}}$$

erfüllt ist, mit

$\overrightarrow{P_{1M}P_1}$ als Vektor vom Drehpunkt ($P_{1M}$) der gestellfesten Antriebseinrichtung (6) zum Drehpunkt ($P_1$) der gestellfesten Oberarmlagerung (0);
$\overrightarrow{P_1P_{1KP}}$ als Vektor vom Drehpunkt ($P_1$) der gestellfesten Oberarmlagerung (0) zum Drehpunkt ($P_{KP}$) des Koppelgelenks (10) auf dem Oberarm (1);
$\overrightarrow{P_{1M}P_{1G8}}$ als Vektor vom Drehpunkt ($P_{1M}$) der gestellfesten Antriebseinrichtung (6) zum Drehpunkt ($P_{1G8}$) des Gelenks (8) zwischen Kurbel (7) und Pleuel (9); und
$\overrightarrow{P_{1G8}P_{1KP}}$ als Vektor vom Drehpunkt ($P_{1G8}$) des Gelenks zwischen Kurbel (7) und Pleuel (9) zum Drehpunkt ($P_{KP}$) des Koppelgelenks (10) auf dem Oberarm (1).

2. Parallelroboter gemäß Anspruch 1, wobei das Vorgetriebe eben ausgestaltet ist und folgende Bedingung erfüllt ist:

$$l_{max} + l_7 \leq l' + l''$$

mit

$l_{max}$ als längstes Glied von $l_{05}$, $l_9$, $l_{010}$;
$l_7$ als Länge der Kurbel (7) kleiner als jedes von $l_{05}$, $l_9$, $l_{010}$;
$l'$, $l''$ Längen der übrigen beiden Glieder von $l_{05}$, $l_9$, $l_{010}$;

mit

$l_{05}$ als Abstand zwischen dem Drehpunkt ($P_1$) der gestellfesten Oberarmlagerung (0) und dem Drehpunkt t ($P_{1M}$) der gestellfesten Antriebseinrichtung (6) sei;
$l_9$ als Länge des Pleuels (9);
$l_{010}$ als Distanz zwischen dem Drehpunkt der gestellfesten Oberarmlagerung (0) und dem Drehpunkt ($P_{KP}$) des Koppelgelenks (10) auf dem Oberarm (1).

3. Parallelroboter gemäß Anspruch 1 oder 2, wobei die Übertragungswinkel ($\mu_1$, $\mu_2$) des Pleuels (9) auf den Oberarm (1) jeweils größer oder gleich 20 Grad sind.

4. Parallelroboter gemäß einem der vorherigen Ansprüche, wobei die zumindest eine Antriebseinrichtung (6) eine Drehachse aufweist, die nicht parallel zur Drehachse des Oberarms (1) orientiert ist, die zweite kinematische Struktur einen Freiheitsgrad von mindestens drei aufweist und das Koppelgelenk (10) einen Freiheitsgrad von mindestens drei aufweist.

5. Parallelroboter gemäß einem der vorherigen Ansprüche, wobei die zumindest eine Antriebseinrichtung (6) eine Drehachse aufweist, die parallel zur Drehachse des Oberarms (1) orientiert ist, und die zweite kinematische Struktur einen Freiheitsgrad von mindestens zwei aufweist, zuzüglich eines Freiheitsgrads von mindestens eins für das Koppelgelenk (10).

6. Parallelroboter gemäß einem der vorherigen Ansprüche, wobei drei parallele kinematische Stränge und drei Antriebseinrichtungen (6) vorgesehen sind, wobei die drei Stränge und die drei Antriebseinrichtungen (6) jeweils sternförmig zueinander angeordnet sind.

7. Parallelroboter gemäß einem der vorherigen Ansprüche, wobei vier oder sechs parallele kinematische Stränge sowie die jeweils entsprechende Anzahl von Antriebseinrichtungen (6) vorgesehen sind.

8. Parallelroboter gemäß einem der vorherigen Ansprüche, wobei die erste kinematische Struktur und die zweite kinematische Struktur an einem einzigen zentralen Gestell angeordnet sind.

9. Parallelroboter gemäß einem der vorherigen Ansprüche, wobei die zweite kinematische Struktur zumindest ein exzentrisches kardanisches Gelenk sowie einen Freiheitsgrad von mindestens drei aufweist.

10. Parallelroboter gemäß dem vorherigen Anspruch, wobei das zumindest eine exzentrische kardanische Gelenk umlauffähig ausgestaltet ist.

11. Parallelroboter gemäß einem der vorherigen Ansprüche, wobei zumindest eine der Antriebseinrichtungen (6) mit einer Steuerungseinrichtung wirkverbunden ist, welche die Antriebseinrichtungen (6) so ansteuert, dass die zumindest eine Antriebseinrichtung (6) eine fortlaufende oder pilgerschrittartige Bewegung über Streck- und Decklagen des der zweiten kinematischen Struktur hinweg ausführen, derart, dass die Werkzeugplattform (11) eine Bewegung zwischen mindestens zwei Arbeitspunkten (A, B) innerhalb eines Arbeitsraumes ausführt.

12. Verfahren zum Betreiben eines Parallelroboters gemäß einem der vorherigen Ansprüche, wobei die zumindest eine Antriebseinrichtung (6) jeweils eine fortlaufende oder pilgerschrittartige Bewegung über Streck-und Decklagen der zweiten kinematischen Struktur hinweg ausführt, derart, dass die Werkzeugplattform (11) eine Bewegung zwischen mindestens zwei Arbeitspunkten (A, B) innerhalb eines Arbeitsraumes ausführt wobei die Bewegung der Antriebseinrichtung (6) zumindest einen Zyklus umfasst, der zumindest einen schwenkenden Bewegungsanteil und zumindest einen umlaufenden Bewegungsanteil umfasst, wobei der schwenkende Bewegungsanteil durch die fortlaufende oder pilgerschrittartige Bewegung gebildet wird und der schwenkende Bewegungsanteil keine Bewegung über Streck- und Decklagen umfasst.

## Claims

1. A parallel robot having at least one drive device (6) and a tool platform (11) for coupling at least one end effector, said parallel robot being formed by a first kinematic structure and a second kinematic structure, said first kinematic structure being fixedly hinged permitting rotation thereof and said second kinematic structure being fixedly mounted and the first kinematic structure having the tool platform (11) and the second kinematic structure having the at least one drive device (6) and being configured to drive the first kinematic structure, said first kinematic structure and said second kinematic structure being coupled to each other via only at least one coupling joint (10), said first kinematic structure and said second kinematic structure having no kinematic members in common, and said at least one drive device (6) being capable of rotating,

wherein said first kinematic structure has at least two parallel kinematic chains comprising each at least one upper arm (1) and at least one forearm (3), said upper arm being fixedly mounted at one end by means of a respective upper arm joint (0) and being connected at a second end to a first end of said forearm by means of a forearm joint (2), and said forearm being coupled at its second end to said tool platform (11), wherein said second kinematic structure comprises a pre-transmission arranged between the drive device (6) and the coupling joint (10), said pre-transmission comprising a crank (7) and a connecting rod (9) and a joint (8) arranged between said crank (7) and said connecting rod (9), and said crank (7) being capable of rotating

**characterised in that**
for all positions of the one point on the upper arm (1) on which the coupling joint (10) is arranged, at least one solution for the respective position of the crank (7) having the pre-transmission is given, and thus the vector equation

$$\overrightarrow{P_{1M}P_1} + \overrightarrow{P_1 P_{KP}} = \overrightarrow{P_{1M}P_{1G8}} + \overrightarrow{P_{1G8}P_{1KP}}$$

is fulfilled, with

$\overrightarrow{P_{1M}P_1}$ being the vector from rotation point ($P_{1M}$) of the fixedly mounted drive device (6) to rotation point ($P_1$) of the fixedly mounted upper arm mounting;
$\overrightarrow{P_1 P_{KP}}$ being the vector from rotation point ($P_1$) of the fixedly mounted upper arm mounting (0) to rotation point ($P_{KP}$) of the coupling joint (10) on the upper arm (1);
$\overrightarrow{P_{1M}P_{1G8}}$ being the vector from rotation point ($P_{1M}$) of the fixedly mounted drive device (6) to the rotation point ($P_{1G8}$) of the joint (8) between crank (7) and connecting rod (9); and

$\overrightarrow{P_{1M}P_{1G8}}$ being the vector from rotation point ($P_{1G8}$) of the joint between crank (7) and connecting rod (9) to rotation point ($P_{KP}$) of the coupling joint (10) on the upper arm (1).

2. The parallel robot as claimed in claim 1, wherein the pre-transmission has a planar configuration and the following condition is fulfilled:

$$l_{max} + l_7 \leq l' + l''$$

with

$l_{max}$ being a member of $l_{05}$, $l_9$, $l_{010}$;
$l_7$ being the length of crank (7) which is smaller than any of $l_{05}$, $l_9$, $l_{010}$;
l', l'' being the lengths of the remaining two members of $l_{05}$, $l_9$, $l_{010}$;
with
$l_{05}$ being the distance between rotation point ($P_1$) of the fixedly mounted upper arm mounting (0) and rotation point ($P_{1M}$) of the fixedly mounted drive device (6);
$l_9$ being the length of the crank (9);
$l_{010}$ being the distance between the rotation point of the fixedly mounted upper arm mounting (0) and the rotation point ($P_{KP}$) of the coupling joint (10) on the upper arm (1).

3. The parallel robot as claimed in claim 1 or 2, wherein the respective transmission angles ($\mu_1$, $\mu_2$) of crank (9) to upper arm (1) are greater than or equal to 20 degrees.

4. The parallel robot as claimed in any of the preceding claims, wherein the at least one drive device (6) has an axis of rotation which is not oriented in parallel with the axis of rotation of the upper arm (1), the second kinematic structure has at least three degrees of freedom, and the coupling joint (10) has at least three degrees of freedom.

5. The parallel robot as claimed in any of the preceding claims, wherein the at least one drive device (6) has an axis of rotation which is oriented in parallel with the axis of rotation of the upper arm (1), and the second kinematic structure has at least two degrees of freedom, plus at least one degree of freedom for the coupling joint (10).

6. The parallel robot as claimed in any of the preceding claims, wherein three parallel kinematic chains and three drive devices (6) are provided, each of said three chains and three drive devices (6) being arranged in a star-shaped manner with respect to one another.

7. The parallel robot as claimed in any of the preceding claims, wherein four or six parallel kinematic chains and a corresponding number of drive devices (6) are provided.

8. The parallel robot as claimed in any of the preceding claims, wherein the first kinematic structure and the second kinematic structure are arranged on a single, central robot base.

9. The parallel robot as claimed in any of the preceding claims, wherein the second kinematic structure has at least one eccentric cardan joint and has at least three degrees of freedom.

10. The parallel robot as claimed in any of the preceding claims, wherein the at least one eccentric cardan joint is capable of rotating.

11. The parallel robot as claimed in any of the preceding claims, wherein at least one of the drive devices (6) is operatively connected to a control device which activates the drive device (6) in such a manner that the at least one drive device (6) performs a continuous movement or a step-back movement over a range of stretching positions and covering positions of the second kinematic structure, such that the tool platform (11) executes a movement between at least two operating points (A, B) within a working area.

12. A method of operating a parallel robot as claimed in any of the preceding claims, wherein the at least one drive device (6) performs a continuous movement or a step-back movement over a range of stretching positions and covering positions of the second kinematic structure, such that the tool platform (11) executes a movement between at least two operating points (A, B) within a working area, wherein the movement of the drive device (6) comprises at least one cycle which comprises at least one pivoting motion component and at least one rotating motion component, wherein the pivoting motion component is formed by the continuous movement or the step-back movement and said pivoting motion component does not comprise any movement over stretching positions and covering positions.

**Revendications**

1. Robot parallèle avec au moins un dispositif d'entraînement (6) et une plate-forme d'outillage (11) destinée au couplage d'au moins un effecteur terminal, le robot parallèle étant formé par une première structure cinématique et une deuxième structure cinématique, la première structure cinématique étant articulée solidairement de manière à pouvoir tourner et la deuxième structure cinématique étant fixée solidairement, et la première structure cinématique présentant la plate-forme d'outillage (11) et la deuxième structure cinématique présentant ledit au moins un dispositif d'entraînement (6) et étant conçue pour entraîner ladite première structure cinématique, la première structure cinématique et la deuxième structure cinématique étant couplées l'une à l'autre uniquement par au moins un joint de couplage (10), la première structure cinématique et la deuxième structure cinématique étant indépendantes l'une de l'autre et ledit au moins un dispositif d'entraînement (6) étant réalisé de manière à pouvoir tourner,

dans lequel la première structure cinématique comprend au moins deux barres cinématiques parallèles dont chacune comprend au moins un bras (1) et au moins un avant-bras (3), le bras étant disposé, à une extrémité, solidairement au moyen respectivement d'une articulation de bras (0) et étant relié, à une deuxième extrémité, à une première extrémité de l'avant-bras au moyen respectivement d'une articulation d'avant-bras (2), et ledit avant-bras étant couplé, à sa deuxième extrémité, à la plate-forme d'outillage (11),

dans lequel la deuxième structure cinématique comprend un mécanisme en amont qui est disposé entre le dispositif d'entraînement (6) et le joint de couplage (10), le mécanisme en amont comprenant une manivelle (7) et une bielle (9) ainsi qu'une articulation (8) située entre la manivelle (7) et la bielle (9), et la manivelle (7) pouvant tourner, **caractérisé en ce que**

il existe, pour toutes les positions occupées par le point situé sur le bras (1) sur lequel est disposé le joint de couplage (10), au moins une solution pour la position respective occupée par la manivelle (7) avec le mécanisme en amont, et ce afin que l'équation vectorielle suivante :

$$\overrightarrow{P_{1M}P_1} + \overrightarrow{P_1P_{KP}} = \overrightarrow{P_{1M}P_{1G8}} + \overrightarrow{P_{1G8}P_{1KP}}$$

soit satisfaite, avec
$\overrightarrow{P_{1M}P_1}$ étant le vecteur partant du point de rotation ($P_{1M}$) du dispositif d'entraînement (6) solidaire vers le point de rotation ($P_1$) du logement de bras (0) solidaire;
$\overrightarrow{P_1P_{KP}}$ étant le vecteur partant du point de rotation ($P_1$) du logement de bras (0) solidaire vers le point de rotation ($P_{KP}$) du joint d'articulation (10) situé sur le bras (1) ;
$\overrightarrow{P_{1M}P_{1G8}}$ étant le vecteur partant du point de rotation ($P_{1M}$) du dispositif d'entraînement (6) solidaire vers le point de rotation ($P_{1G8}$) de l'articulation (8) située entre la manivelle (7) et la bielle (9) ; et
$\overrightarrow{P_{1M}P_{1G8}}$ étant le vecteur partant du point de rotation ($P_{1G8}$) de l'articulation située entre la manivelle (7) et la bielle (9) vers le point de rotation ($P_{KP}$) du joint de couplage (10) situé sur le bras (1).

2. Robot parallèle selon la revendication 1, dans lequel le mécanisme en amont est plan et la condition suivante est satisfaite :

$$l_{max} + l_7 \leq l'+l''$$

avec

$l_{max}$ étant un élément de $l_{05}$, $l_9$, $l_{010}$;
$l_7$ étant la longueur de la manivelle (7) inférieure à chacun des éléments de $l_{05}$, $l_9$, $l_{010}$;
$l'$, $l''$ étant les longueurs des deux autres éléments de $l_{05}$, $l_9$, $l_{010}$ ;
avec
$l_{05}$ étant l'écart entre le point de rotation ($P_1$) du logement de bras (0) solidaire et le point de rotation t ($P_{1M}$) du dispositif d'entraînement (6) solidaire;
$l_9$ étant la longueur de la bielle (9) ;
$l_{010}$ étant la distance entre le point de rotation du logement de bras (0) solidaire et le point de rotation ($P_{KP}$) du joint de couplage (10) situé sur le bras (1).

3. Robot parallèle selon la revendication 1 ou 2, dans lequel les angles de transmission ($\mu_1$, $\mu_2$) de la bielle (9) sur le bras (1) sont respectivement supérieurs ou égaux à 20 degrés.

4. Robot parallèle selon l'une quelconque des revendications précédentes, dans lequel ledit au moins un dispositif d'entraînement (6) présente un axe de rotation qui n'est pas orienté parallèlement à l'axe de rotation du bras (1), dans lequel la deuxième structure cinématique présente au moins trois degrés de liberté et le joint de couplage (10) présente au moins trois degrés de liberté.

5. Robot parallèle selon l'une quelconque des revendications précédentes, dans lequel ledit au moins un dispositif d'entraînement (6) présente un axe de rotation qui est orienté parallèlement à l'axe de rotation du bras (1) et la deuxième structure cinématique présente au moins deux degrés de liberté, en plus d'au moins un degré de liberté pour le joint de couplage (10).

**6.** Robot parallèle selon l'une quelconque des revendications précédentes, dans lequel sont prévues trois barres cinématiques parallèles et trois dispositifs d'entraînement (6), les trois barres et les trois dispositifs d'entraînement (6) étant disposés respectivement en étoile les uns par rapport aux autres.

**7.** Robot parallèle selon l'une quelconque des revendications précédentes, dans lequel sont prévues quatre ou six barres cinématiques parallèles ainsi que le nombre respectif correspondant de dispositifs d'entraînement (6).

**8.** Robot parallèle selon l'une quelconque des revendications précédentes, dans lequel la première structure cinématique et la deuxième structure cinématique sont disposées sur un seul et unique bâti central.

**9.** Robot parallèle selon l'une quelconque des revendications précédentes, dans lequel la deuxième structure cinématique présente au moins un joint de cardan excentrique ainsi qu'au moins trois degrés de liberté.

**10.** Robot parallèle selon la revendication précédente, dans lequel ledit au moins un joint de cardan excentrique est conçu de manière à pouvoir tourner.

**11.** Robot parallèle selon l'une quelconque des revendications précédentes, dans lequel au moins un des dispositifs d'entraînement (6) est relié de manière opérationnelle à un dispositif de commande qui active les dispositifs d'entraînement (6) de sorte que ledit au moins un dispositif d'entraînement (6) exécute un déplacement continu ou à pas de pèlerin sur des positions de recouvrement ou de prolongement de la deuxième structure cinématique de manière telle que la plate-forme d'outillage (11) exécute un mouvement entre au moins deux points de travail (A, B) à l'intérieur d'un espace de travail.

**12.** Procédé destiné à faire fonctionner un robot parallèle selon l'une quelconque des revendications précédentes, dans lequel ledit au moins un dispositif d'entraînement (6) exécute respectivement un déplacement continu ou à pas de pèlerin sur des positions de recouvrement ou de prolongement de la deuxième structure cinématique de sorte que la plate-forme d'outillage (11) exécute un mouvement entre deux points de travail (A, B) à l'intérieur d'un espace de travail, le déplacement du dispositif d'entraînement (6) comprenant au moins un cycle qui comprend au moins une composante de mouvement pivotant et au moins une composante de mouvement rotatif, la composante de mouvement pivotant étant formée par le mouvement continu ou à pas de pèlerin et ladite composante de mouvement pivotant ne comprenant pas de mouvement sur des positions de recouvrement et de prolongement.

Fig. 1

$^{K0}P_{1M}(x_{1M}, y_{1M}, z_{1M}, \alpha_{1M}, \beta_{1M}, \gamma_{1M})$

$^{K0}P_1(x_1, y_1, z_1, \alpha_1, \beta_1, \gamma_1)$

$\{K_{01}\}$

$^{K0}P_3$

$^{K0}P_2$

$l_{O5}$

$l_7$

$l_9$

$l_{O3}$

$l_{O2}$

$l_{O10}$

$\{K_1\}$

$l_{U3}$

$l_{U2}$

$l_{O1}$

$^{K1}P_{1KP}(x_{1KP}, y_{1KP}, z_{1KP})$

$l_{U1}$

$^{KTCP}P_{1U}$

$\{K_0\}$

$\{K_{TCP}\}$

EP 3 122 519 B1

Fig. 2

$P_{1M}(x_{1M}, y_{1M}, z_{1M})$

$P_1(x_1, y_1, z_1)$

6

5

7

8

$P_{1G8}(x_{1G8}, y_{1G8}, z_{1G8})$

$l_{05}$

$l_7$

$l_9$

9

$l_{O10}$

10

$P_{1KP}(x_{1KP}, y_{1KP}, z_{1KP})$

1

y

x

z

Fig. 3

EP 3 122 519 B1

16

Fig. 4

**Fig. 5**

EP 3 122 519 B1

**Fig. 6**

**Fig. 7**

$^{K0}P_{1M}$

6

7

$\left.\begin{array}{c}31\\32\end{array}\right\}8$

9

33,10

$\{K_1\}$

$^{K0}P_1$

$y$

$z$ $x$

$^{K1}P_{KP}(x_{1KP},y_{1KP},z_{1KP})$

0

1

2

EP 3 122 519 B1

**Fig. 8a**

$^{K0}P_{1M}$

6

7

41
42
43

8

9

44
45

10

$\{K_1\}$

$^{K0}P_1$

y

z

x

a

b

$^{K1}P_{KP}(x_{1KP}, y_{1KP}, z_{1KP})$

0

2

1

EP 3 122 519 B1

Fig. 8b

$^{K0}P_{1M}$ — 6

7

a — 61,8

9

$\{K_1\}$

$^{K0}P_1$ — 62,10

$^{K1}P_{KP}(x_{1KP}, y_{1KP}, z_{1KP})$

0

1

2

**Fig. 9a**

EP 3 122 519 B1

**Fig. 9b**

EP 3 122 519 B1

**Fig. 10**

Fig. 11

$R_{Ellipse} > R_{Kreis}$

**Fig. 12**

EP 3 122 519 B1

**IN DER BESCHREIBUNG AUFGEFÜHRTE DOKUMENTE**

**In der Beschreibung aufgeführte Patentdokumente**

- WO 2012116991 A
- US 5326218 A